(19) Europäisches Patentamt
European Patent Office
Office européen des brevets

(11) **EP 4 641 494 A1**

(12) **EUROPEAN PATENT APPLICATION**

(43) Date of publication:
**29.10.2025 Bulletin 2025/44**

(21) Application number: **24305636.3**

(22) Date of filing: **24.04.2024**

(51) International Patent Classification (IPC):
**G06T 7/11** $^{(2017.01)}$    **G06T 7/194** $^{(2017.01)}$

(52) Cooperative Patent Classification (CPC):
**G06T 7/11; G06T 7/194**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Dassault Systèmes**
**78140 Vélizy-Villacoublay (FR)**

(72) Inventor: **NDOKO, Arthur**
**VELIZY VILLACOUBLAY (FR)**

(74) Representative: **Bandpay & Greuter**
**11 rue Christophe Colomb**
**75008 Paris (FR)**

(54) **SEGMENTING OF IMAGE**

(57) The disclosure notably relates to a computer-implemented method for segmenting an image. The method comprises obtaining (S10) an original image ($I_0$) to be segmented and an original bimap ($B_{ini}$). The method comprises computing 520 one or more images ($\forall k \in 1, \dots, n, I_k$) each by downsampling the original image ($I_0$). The method comprises segmenting (S40) the lowest resolution image ($I_n$) based on a bimap ($B_n$) of the image ($I_n$) having the lowest resolution. The method comprises, iteratively (S50) for each determined image, starting from the lowest resolution image ($I_n$) and increasing the resolution ($\forall k \in 1, \dots, n$ in descending order) determining (S51) an upsampled segmentation mask $(S_k^{up})$ having a next resolution, determining (S52) a respective bimap ($B_{k-1}$) of the image ($I_{k-1}$) having the next resolution and segmenting (S53) the next resolution image ($I_{k-1}$) based on the respective bimap ($B_{k-1}$). Such a method forms an improved solution for segmenting an image.

FIG. 3

## Description

## TECHNICAL FIELD

The disclosure relates to the field of computer programs and systems, and more specifically to a method, system and program for segmenting an image.

## BACKGROUND

Segmentation of an image or a volume consists in delimitating coherent regions within the given image or volume. Images and volumes are usually represented as spatial grids of which each cell (a pixel for an image, a voxel for a volume) is holding graphical values, including typically: color, gray level, opacity. In that setting, segmenting an image can be seen as classifying each cell with regard to the region that it belongs to. A segmentation result can then be represented as a spatial grid where each cell is holding a single discrete value, a label, that indicates which region that it belongs to. Such a representation is called a segmentation mask.

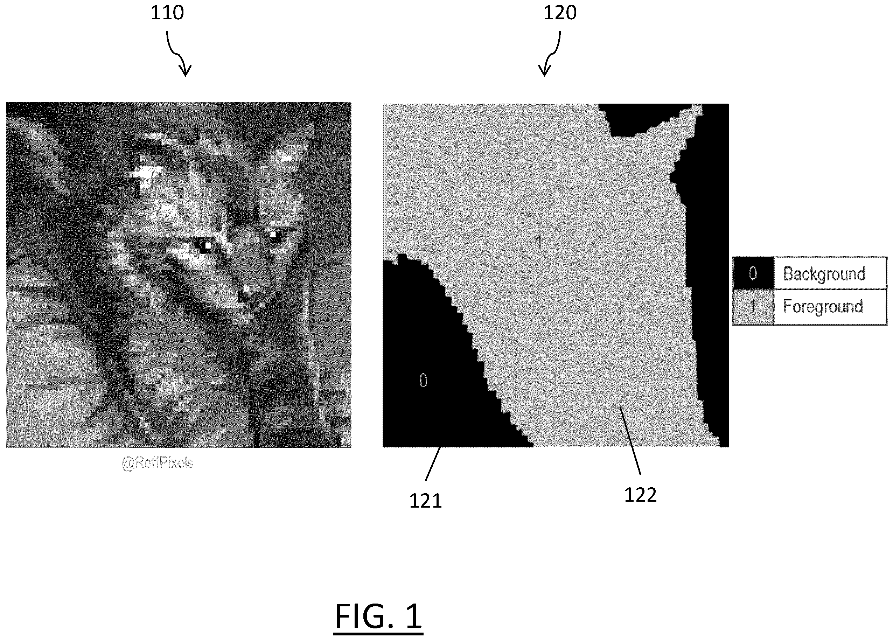

A particular case of segmentation is binary segmentation. A binary segmentation is a segmentation where they are only two regions to delimitate. These two regions are usually called "foreground" and "background". FIG. 1 illustrates an example of a binary segmentation. In this example, the considered image is a 2D image 110. The result of the binary segmentation is a segmentation mask 120 indicating cells of the image belonging to the foreground 121 and cells of the image belonging to the background 122.

State of the art techniques for segmentation usually rely on deep learning techniques. However, they are not well suited for contexts where there is no existing large dataset of pairs of images or volumes and segmentation masks. In this kind of contexts, some of the existing binary segmentation techniques are referred to as "example-based" methods.

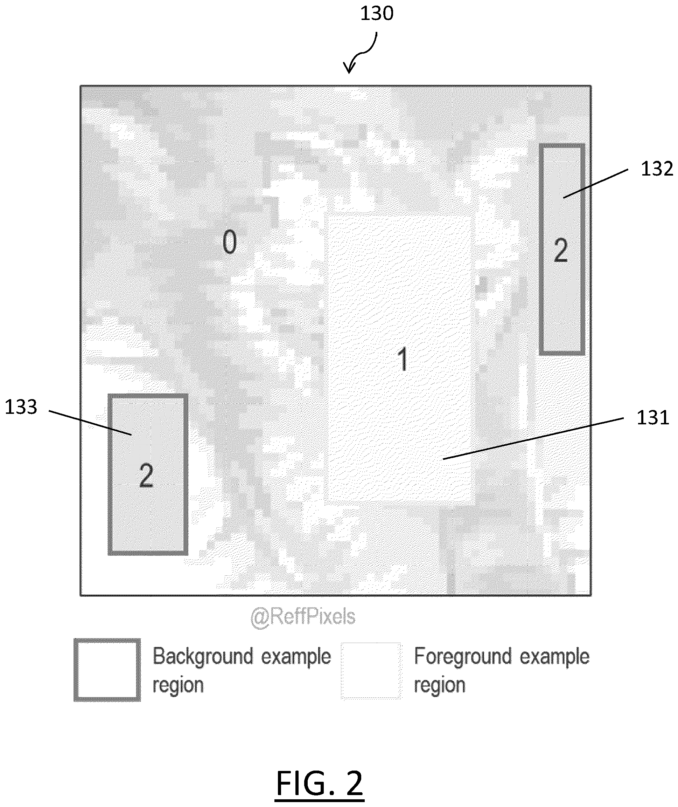

Those "example-based" methods require initialization data consisting in what is referred to as a "bimap". Similarly to a segmentation mask, a bimap decomposes the image/volume in three regions: a foreground example region (or region of interest) that is presumably included in the foreground, a background example region presumably included in the background and an undefined region containing the rest of the image/volume. This bimap may be computed by an upstream computer program or manually created, e.g., by the user selecting regions on the image. FIG. 2 shows a bimap that may have been provided to generate the binary segmentation of FIG. 1. The bimap includes three (e.g., manually created) regions: a first example region 131 for the foreground and two example regions 132, 133 for the background. The undefined region contains the rest of the cells not contained in the first example region 131 or in the two example regions 132, 133.

Example-based binary segmentation methods consist in classifying the cells of the image by leveraging the example regions defined in the bimap for the foreground and for the background. Generally, descriptive features of the cells and their surroundings are compared with models of the foreground and the background regions built thanks to the example regions. The Graph-Cut algorithm is an example of existing algorithms used in such methods based on descriptive features. Other existing algorithms include the GeoS algorithm or algorithms using cell-wise machine-learning classifiers trained on the example regions. In these algorithms, the larger the example regions are, the better the expected segmentation result is.

The major drawback of exampled-based methods is that they are computationally expensive especially for volume segmentation as their complexity can be $O(n^2)$ with regard to the number of segmented cells. This disadvantage affects the segmentation of 2D images, but it is even more acute for the segmentation of 3D images for which the number of voxels increases even faster with the resolution. Moreover, example-based methods are limited in terms of quality, since the segmentation masks produced may exhibit high frequency artifacts in the outputted segmentation masks, such as small background details mislabeled as foreground.

Within this context, there is still a need for an improved method for segmenting an image.

## SUMMARY

It is therefore provided a computer-implemented method for segmenting an image. The method comprises obtaining an original image ($I_0$) to be segmented. The original image ($I_0$) has an original resolution. The original image ($I_0$) comprises a spatial grid having cells and, for each cell, a value of at least one channel. The method also comprises obtaining an original bimap ($B_{ini}$ of the original image ($I_0$). A bimap ($B_i$) of a given image ($I_i$) includes first cells labelled with a first value representing a background of the given image ($I_i$) and second cells labelled with a second value representing a region of interest of the given image ($I_i$). The method comprises computing one or more images ($\forall k \in 1, ..., n, I_k$) each by downsampling the original image ($I_0$) to a respective resolution. The method comprises computing a bimap ($B_n$) of the image ($I_n$) having the lowest resolution by downsampling the obtained original bimap ($B_{ini}$) at the same resolution as the lowest resolution image ($I_n$). The method comprises segmenting the lowest resolution image ($I_n$) based on the bimap ($B_n$) of the image ($I_n$) having the lowest resolution, thereby obtaining a segmentation mask ($S_n$) of the lowest resolution image ($I_n$). The method comprises, iteratively for each given image ($I_k$) of the one or more determined images, starting from the lowest resolution image ($I_n$) and increasing the resolution ($\forall k \in 1, ... , n$ in descending order), the following steps. A first step comprises determining an upsampled segmentation mask ($S_k^{up}$) having a next resolution by upsampling the segmentation mask ($S_k$) obtained for the given image ($I_k$) to the next resolution. A second step comprises determining a respective bimap ($B_{k-1}$) of the image ($I_{k-1}$) having the next resolution based on the determined upsampled segmentation mask ($S_k^{up}$). Each cell of the respective bimap ($B_{k-1}$) having a neighborhood including only cells of the background according to the determined upsampled segmentation mask ($S_k^{up}$) is labelled with the first value. Each cell of the respective bimap ($B_{k-1}$) having a neighborhood including only cells of the region of interest according to the upsampled segmentation mask ($S_k^{up}$) is labelled with the second value. A third step comprises segmenting the next resolution image ($I_{k-1}$) based on the respective bimap ($B_{k-1}$), thereby obtaining a segmentation mask ($S_{k-1}$) of the next resolution image ($I_{k-1}$). The method comprises outputting the segmentation mask ($S_0$) of the original image ($I_0$) obtained at the last iteration.

The method may comprise one or more of the following:

- The neighborhood of cells considered at each iteration is of constant absolute dimension from one iteration to the next;
- The segmenting of each given image ($I_i$) based on the bimap ($B_i$) determined for the given image ($I_i$) comprises:

   ○ labelling all cells labelled with the first or second value in the bimap ($B_i$), as belonging to the background or to the region of interest in the segmentation mask ($S_i$) accordingly; and
   ○ applying a segmentation algorithm to all cells not labelled with the first or second value in the bimap ($B_i$) for determining whether they belong to the background or to the region of interest and labelling them accordingly in the segmentation mask ($S_i$);

- The segmentation algorithm is an interactive binary segmentation algorithm using the bimap ($B_i$) as indication;
- For each determined image ($I_k$), the downsampling of the original image ($I_0$) to a respective resolution comprises:

   ○ determining an empty spatial grid of the determined image ($I_k$) sized at the respective resolution; and
   ○ assigning values to the cells of the determined empty spatial grid corresponding to the values in the corresponding cells of the spatial grid of the original image ($I_0$);

- The assigning of the values to the cells of the determined empty spatial grid is performed by:

   ○ interpolating the values in the corresponding cells of the spatial grid of the original image ($I_0$), or
   ○ by assigning, for each cell, the value in the closest cell of the spatial grid of the original image ($I_0$);

- The method further comprises, prior to the computing (S20) of the one or more images (b' $k \in 1, \dots, n$, $I_k$):

   ○ modifying the values of the cells of the spatial grid of the original image ($I_0$) by applying an anti-aliasing filter to the original image ($I_0$);

- The values assigned to the cells of the determined empty spatial grid are the modified values of the cells after the applying of the anti-aliasing filter;
- Each computed image ($I_k$) is a downsampled version of the original image ($I_0$) by a rate $\delta^k$, wherein $\delta$ is a real value higher than 1;
- The computing (S30) of the respective bimap ($B_n$) of the image ($I_n$) having the lowest resolution comprises downsampling the obtained original bimap ($B_{ini}$) to the resolution of the image ($I_n$) having the lowest resolution;
- The lowest resolution is chosen such as the image ($I_n$) is not a trivial image, preferably such as the image ($I_n$) is larger than a square or a cube of 8 cells on each side;
- The original image is a 2D image or a 3D image; and/or
- The original image is a 3D medical image.

It is further provided a computer program comprising instructions which, when the program is executed by a computer, cause the computer to carry out the method.

It is further provided a computer readable storage medium having recorded thereon the computer program.

It is further provided a system comprising a processor coupled to a memory and a graphical user interface, the memory having recorded thereon the computer program.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIGs. 1 and 2 illustrate an example of binary segmentation;
- FIGs. 3 and 4 show flowcharts of examples of the method;
- FIGs. 5 illustrates an example of segmentation of the method;
- FIGs. 6 to 9 illustrate examples of image segmentation using the method; and
- FIG. 10 shows an example of the system.

## DETAILED DESCRIPTION

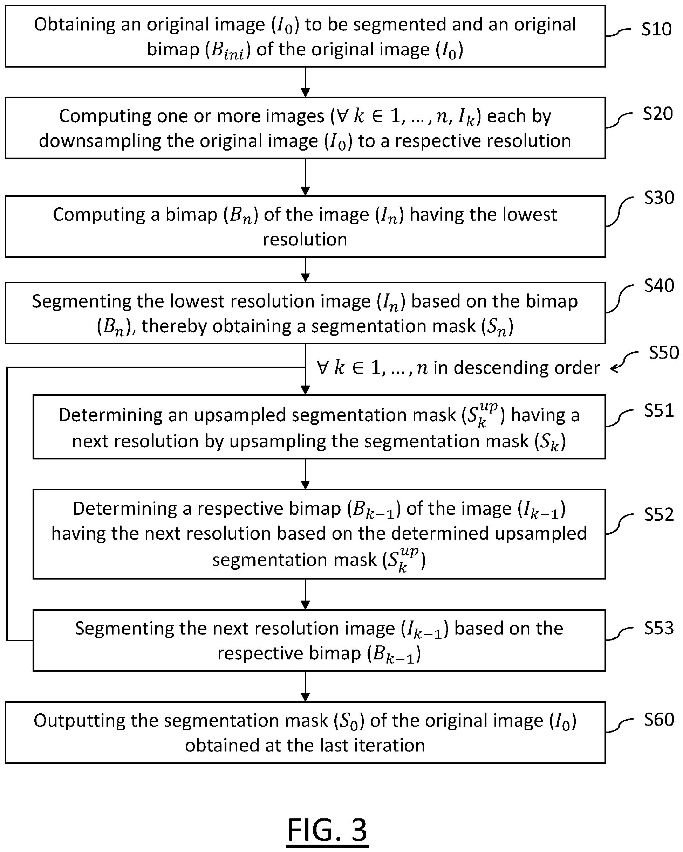

With reference to the flowchart of FIG. 3, it is proposed a computer-implemented method for segmenting an image. The method comprises obtaining S10 an original image ($I_0$) to be segmented. The original image ($I_0$) has an original resolution. The original image ($I_0$) comprises a spatial grid having cells and, for each cell, a value of at least one channel. The method also comprises obtaining S10 an original bimap ($B_{ini}$) of the original image ($I_0$). A bimap ($B_i$) of a given image ($I_i$) includes first cells labelled with a first value representing a background of the given image ($I_i$) and second cells labelled with a second value representing a region of interest of the given image ($I_i$). The method comprises computing S20 one or more images ($\forall\ k \in 1, ... , n, I_k$) each by downsampling the original image ($I_0$) to a respective resolution. The method comprises computing S30 a bimap ($B_n$) of the image ($I_n$) having the lowest resolution by downsampling the obtained original bimap ($B_{ini}$) at the same resolution as the lowest resolution image ($I_n$). The method comprises segmenting S40 the lowest resolution image ($I_n$) based on the bimap ($B_n$) of the image ($I_n$) having the lowest resolution, thereby obtaining a segmentation mask ($S_n$) of the lowest resolution image ($I_n$). The method comprises, iteratively S50 for each given image ($I_k$) of the one or more determined images, starting from the lowest resolution image ($I_n$) and increasing the resolution ($\forall\ k \in 1, ... , n$ in descending order), the following steps. A first step comprises determining S51 an upsampled segmentation mask ($S_k^{up}$) having a next resolution by upsampling the segmentation mask ($S_k$) obtained for the given image ($I_k$) to the next resolution. A second step comprises determining S52 a respective bimap ($B_{k-1}$) of the image ($I_{k-1}$) having the next resolution based on the determined upsampled segmentation mask ($S_k^{up}$). Each cell of the respective bimap ($B_{k-1}$) having a neighborhood including only cells of the background according to the determined upsampled segmentation mask ($S_k^{up}$) is labelled with the first value. Each cell of the respective bimap ($B_{k-1}$) having a neighborhood including only cells of the region of interest according to the upsampled segmentation mask ($S_k^{up}$) is labelled with the second value. A third step comprises segmenting S53 the next resolution image ($I_{k-1}$) based on the respective bimap ($B_{k-1}$), thereby obtaining a segmentation mask ($S_{k-1}$) of the next resolution image ($I_{k-1}$). The method comprises outputting S60 the segmentation mask ($S_0$) of the original image ($I_0$) obtained at the last iteration. Such a method forms an improved solution for segmenting an image.

Notably, the method allows segmenting the image using an iterative scheme. Indeed, starting from a low resolution, the method iteratively segments a higher resolution version of the original image from a bimap determined according to the segmentation calculated in the previous step, until the resolution of the original image is reached. The method thus allows achieving, step-by-step, the segmentation of the original image at the initial resolution.

In particular, the iterative scheme used by the method enables to greatly reduce the overall complexity of the computation, while improving the quality of the results. Indeed, the average number of cells to be classified as region of interest or background is lower by iteration because the segmentations are performed at lower resolutions and a growing number of cells are classified based on the previous iteration. As a result, the method works very quickly and allows for several iterations. Due to its multi-resolution nature, the method enables to prevent high frequency artifacts in the outputted segmentation masks, such as small and mislabeled details. Indeed, at the lowest resolutions of the image, high frequency components of the image such as small details and image noise are filtered out. This enables the segmentation to focus only on the coarse shape of the region of interest and to ignore small ambiguous details. At the highest resolutions, the iterative scheme enables the segmentation to focus on relevant small details on the contour of the region of interest. The method thus improves the quality of the resulting segmentation.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

For instance, the step of obtaining S10 of the original image and the original bimap may be performed upon user interaction. The obtaining S10 may first comprise obtaining the original image, and then obtaining the bimap of the obtained original image. The obtaining of the original image may be performed in any manner. The obtaining of the original image may comprise selecting by a user the original image to be segmented. The original image may be stored in a database (e.g., together with other images), and the obtaining may comprise selecting the original image in the said database (e.g., by clicking on a display of the original image).

The obtaining of the original bimap may be performed once the original image has been obtained. The obtaining of the original bimap may be performed in any manner. The obtaining of the original bimap may comprise selecting, by the user, the first and second cells of the bimap. For example, the obtaining of the original bimap may comprise displaying the original image to the user, and the selecting of the first and second cells may be performed based on the displayed original image. For example, the selecting may be performed by clicking on cells of the displayed original image, for example one by one, or by delimiting a selection area to select several cells at the same time, and by automatically selecting corresponding cells of the bimap (i.e., positioned as the same position). Then, the obtaining of the original bimap may comprise assigning first and second values to the cells of the spatial grid of the bimap. The spatial grid of the bimap may initially be an empty spatial grid of the size of the original image (e.g., with null values), and the assigning may comprise modifying the values of the empty spatial grid according to the selected first and second cells. The assigning may comprise assigning the first value to each selected first cell and the second value to each selected second cell. This step may be performed automatically. The second value represents the region of interest (e.g., the foreground). Each second cell is thus a user-defined cell included in the region of interest of the original image. The first value represents the background (e.g., a region of no interest, for example, placed behind the region of interest). Each first cell is a thus user-defined cell included in the background of the original image.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

By "database", it is meant any collection of data (i.e. information) organized for search and retrieval (e.g. a relational database, e.g. based on a predetermined structured language, e.g. SQL). When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

The method may be included in an image analysis process, which may comprise, after performing the method, using the outputted segmentation mask for analyzing the image. In examples, the outputted segmentation mask may be used for highlighting the region of interest and/or the background in the original image (e.g. by displaying superimposed the outputted segmentation mask and the original image). For example, the image may be a (e.g., 3D) medical image, e.g. acquired by a CT scanner or any other medical imaging device such as a magnetic resonance imaging (MRI) scanner. In this case, the region of interest may correspond to a respective region of the patient's body imaged by the medical image (e.g., an organ, the gastrointestinal tract, arteries, veins, muscle(s) and/or bone(s)). In that case, the outputted segmentation mask may be used for highlighting the region of interest in the original image, e.g., for preparing a surgery for the patient and/or extracting 3D-aware biomarkers like the volume of the region of interest. In other examples, the outputted segmentation mask may be used for extracting the region of interest in the original image. For example, the image may be an image of a 3D scene including objects (e.g., representing a real-world room), and the outputted segmentation mask may be used for extracting a portion of the image corresponding to one of the objects. The region of interest may in that case correspond to this object. By enabling to obtain a quick and accurate segmentation of the image, the method also improves the subsequent analysis of the image performed based on the segmentation. Indeed, it enables the region of interest and background in the original image to be determined quickly and accurately, which is particularly useful for the subsequent uses of the analyzed image such as preparing a surgery for the patient, communicating with the patient or extracting portions of images of 3D scenes.

The method manipulates images, in particular the original image ($I_0$) and the one or more images of reduced resolution ($\forall k \in 1, \dots, n, I_k$). The images may be of any type, such as 2D images or 3D images. Each image comprises a spatial grid, which may be 2D or 3D according to the image type. The spatial grid of each image comprises cells forming together a regular division of a volume or surface (each cell being a pixel for a 2D image or a voxel for 3D image for example). Regular means that all the cells may have the same dimensions. The spatial grid may of each image comprise cells of the same shape, such as square, rectangular or triangular cells. The spatial grid of each image further comprises, for each cell, a value of at least one channel. For example, each cell may comprise a value for each of one or more physical signals, such as RGB values and/or an RGB-D value or a value for a tomography density.

The method also manipulates bimaps, in particular the original bimap ($B_{ini}$) obtained at step S10, the bimap(s) ($\forall k \in 1, ... , n, B_k$) of the one or more images of reduced resolution and the bimap ($B_0$) of the original image determined at the last iteration. A bimap ($B_i$) of a given image ($I_i$) may comprise a spatial grid of the same dimension as that of the given image ($I_i$) having cells holding the first and second values. The bimap ($B_i$) may be implemented in any way. For example, the bimap ($B_i$) may be saved as a separate image (with its own and same spatial grid but containing different values), or as an additional channel on the spatial grid of the given image ($I_i$).

A part of the cells of the bimap are labelled with values (including the first and second values). The cells of the original bimap ($B_{ini}$) may have been labelled by a user as previously discussed. For each bimap ($B_i$), the cells may be labelled with values from a predetermined set of values. This predetermined set of (e.g., discrete) values may include the first value representing the background of the given image ($I_i$) and the second value representing the region of interest of the given image ($I_i$). In examples, the predetermined set of values may also include other values, e.g., each representing another respective region of interest, and/or a null value representing an undefined region of the given image ($I_i$) (i.e., for the rest of the given image ($I_i$)). Some of the cells of the bimap may be labelled with at least one of these other values.

The computing S20 of the one or more images ($\forall k \in 1, ... , n, I_k$) is now discussed. The computing S20 may preserve the aspect ratio of images. Each image ($I_k$) is computed by downsampling the original image ($I_0$) obtained at step S10 to a respective resolution. The resolution of an image may be defined as the number of cells of the image per dimensions. The one or more images ($I_k$) may be computed successively or together at the same time. When the one or more images ($\forall k \in 1, ... , n, I_k$) include a plurality of images ($n \geq 1$), the respective resolution of each image ($I_k$) of the plurality may be distinct to the respective resolution of each other computed image of the plurality. The respective resolutions of the images ($I_k$) may together form an ordered set. The respective resolutions of the computed images ($I_k$) may, for example, be increasing with $k$. In examples, each computed image ($I_k$) is a downsampled version of the original image ($I_0$) by a rate $\delta^k$, wherein $\delta$ is a real value higher than 1. In that case, the respective dimension of each computed image ($I_k$) may be equal to $d_0/\delta^k$, wherein $d_0$ is the dimension of the original image ($I_0$). Here the

downsampling ratio follows a geometric sequence with regards to $k$, in other examples any other growing mathematical sequence may be used.

Examples of computing of a given image ($I_i$) to a respective resolution $r_i$ is now discussed in more details. These details also equally apply to any one of the one or more images ($\forall k \in 1, ... , n, I_k$) computed at step S20.

Each given image ($I_i$) is computed by downsampling of the original image ($I_0$) to the resolution $r_i$. It means that each given image ($I_i$) has a smaller size in terms of the number of pixels as the original image ($I_0$) but covers the same underlying graphical elements. The downsampling of the original image ($I_0$) to the resolution $r_i$ may be performed in any manner. For example, downsampling of the original image ($I_0$) to the resolution $r_i$ may comprise the following two steps. A first step may comprises determining an empty spatial grid sized at the resolution $r_i$. Then, a second step may comprise assigning values to the cells of the determined empty spatial grid corresponding to the values in the corresponding cells of the spatial grid of the original image ($I_0$). After this second step, the resulting spatial grid (with the assigned values) may be the spatial grid of the given image ($I_i$).

The step of assigning values to the cells may be performed in any manner. In examples, the assigning of the values to the cells of the determined empty spatial grid may be performed by interpolating the values in the corresponding cells of the spatial grid of the original image ($I_0$). The corresponding cells are the cells that are overlapping in an absolute image space. The interpolation may be performed by, for each given cell of the given image $I_i$, determining the at least one cell of the original image ($I_0$) that corresponds to the given cell (e.g., the at least one cell that the corresponding position of the given cell includes), and then, computing an average value of the value(s) included in the determined at least one cell. The computed average value may be the value assigned to the given cell.

Alternatively, the assigning of the values to the cells of the determined empty spatial grid may be performed by assigning, for each cell, the value in the closest cell of the spatial grid of the original image ($I_0$). For example, the assigning may comprise, for each given cell of the given image $I_i$, determining the cell of the original image ($I_0$) having the same position as the given cell (i.e., determining the corresponding cell) (e.g., the determined cell may be the one including the position of the barycenter of the given cell), and then, assigning to the given cell the value of the determined cell of the original image ($I_0$). The one or more images ($\forall k \in 1, ... , n, I_k$) may be computed considering any one or any combination of these assignment methods.

In examples, the resolution of the image ($I_n$) having the lowest resolution may be chosen such as the image ($I_n$) is not a trivial image. A trivial image is an image so small that the graphic information it carries is severely degraded. For example, a trivial image may be an image having a single cell (because the background and the object are inevitably confused in this case), or a single row or column of cells (in which one of the image's spatial dimensions has been completely squashed). For example, the lowest resolution may be chosen such as the image ($I_n$) is larger than a square or a cube of 8 cells on each side. When each computed image ($I_k$) is a down-sampled version of the original image ($I_0$) by a rate $\delta^k$, the method may comprise selecting the number of computed images $n$ and the parameter $\delta$ such that the image ($I_n$) is larger than a square or a cube of 8 cells on each side. The method may comprise selecting the parameters n and $\delta$ such that $d_{min}/\delta^k > 8$, wherein $d_{min}$ is the number of cells in the lower dimension of the original image. For example, for an original 2D image of size 512*512, the method may comprise selecting n = 5 and $\delta$ = 2 as parameters.

The computing S30 of the bimap ($B_n$) of the image ($I_n$) having the lowest resolution is now discussed. The computing S30 of the bimap ($B_n$) of the image ($I_n$) having the lowest resolution may be performed in any manner, e.g., based on the obtained original bimap ($B_{ini}$). For example, the computing S30 of the bimap ($B_n$) may comprise downsampling the obtained original bimap ($B_{ini}$) to the resolution of the image ($I_n$) having the lowest resolution. The downsampling of the obtained original bimap ($B_{ini}$) may be performed similarly as the downsampling of the original image ($I_0$) previously discussed. For example, the downsampling of the obtained original bimap ($B_{ini}$) may comprise assigning, for each cell, the value in the closest cell of the spatial grid of original bimap ($B_{ini}$). The values may be assigned to as values of an additional channel in the spatial grid of the image ($I_n$), or alternatively the bimap ($B_n$) may be initialized as an empty grid and the values may be assigned to this empty spatial grid.

The segmenting of an image ($I_i$) based on a bimap ($B_i$) of the image ($I_i$) is now discussed. These details apply equally for the segmenting of the lowest resolution image ($I_n$) based on the bimap ($B_n$) of the image ($I_n$) performed at step S40 or, at each iteration, for the segmenting of the next resolution image ($I_{k-1}$) based on the respective bimap ($B_{k-1}$) performed at step S53.

The result of the segmenting of the image ($I_i$) is a segmentation mask ($S_i$) of the image ($I_i$). The regions labelled with the first or second values of the segmentation mask ($S_i$) may overlap with those defined by the bimap ($B_i$). In the segmentation mask ($S_i$), all cells are labeled as belonging to the background or to the region of interest. The segmentation mask ($S_i$) may include the same labelling as the bimap ($B_i$), i.e., with the first value for the cells belonging to the background and the second value for the cells belonging to the region of interest.

The segmenting of the image ($I_i$) may be performed by a segmentation algorithm. The segmentation algorithm used by the method may be an interactive binary segmentation algorithm using the bimap ($B_i$) as indication. The method may use any interactive binary segmentation algorithm. Performing a segmentation based on a bimap may comprise building statistical models of the features (e.g., intensity values, textures, intensity variations, etc.) of the foreground and background example regions and classifying each cell as background or foreground with regard to their likelihood of fitting with of one or the other model. The statistical models may be associated with an example region or with portions of the example regions. For example, the segmentation algorithm may be a backbone segmentation algorithm such as:

- The Graph-Cut algorithm discussed:

    ○ in the paper by C. C. E. Rother, V. Kolmogorov, and A. Blake. 2004, "'GrabCut': Interactive Foreground Extraction Using Iterated Graph Cuts," in ACM SIGGRAPH 2004 Papers, 309-14, SIGGRAPH '04, New York, NY, USA: Association for Computing Machinery, https://doi.org/10.1145/1186562.1015720, which is incorporated herein by reference, or
    ○ in the paper by Y.Y Boykov, and M.-P. Jolly. 2001, "Interactive Graph Cuts for Optimal Boundary Amp; Region Segmentation of Objects in N-D Images," in Proceedings Eighth IEEE International Conference on Computer Vision, ICCV 2001, 1:105-12 vol.1, https://doi.org/10.1109/ICCV.2001.937505, which is incorporated herein by reference, or

- the GeoS algorithm discussed in the paper by A. Criminisi, T. Sharp, and A. Blake, 2008, "GeoS: Geodesic Image Segmentation," in Computer Vision - ECCV 2008, edited by David Forsyth, Philip Torr, and Andrew Zisserman, 99-112, lecture Notes in Computer Science, Berlin, Heidelberg: Springer, https://doi.org/10.1007/978-3-540-88682-2_9, which is incorporated herein by reference.

The interactive binary segmentation algorithm may be configured for taking as input one or more cells and the bimap ($B_i$), determining whether they belong to the background or to the region of interest using the bimap ($B_i$) as indication and labelling them accordingly in the segmentation mask ($S_i$) of the image ($I_i$). The determining, by the interactive binary segmentation algorithm, of whether a given cell belong to the background or to the region of interest may be based on statistical models of computed features for the cells labelled as background or region of interest in the bimap ($B_i$), and how well the given cell fits these models. For example, the given cell may belong to the background if it is more likely to satisfy the background model to those of the cells belonging to the background in the bimap ($B_i$) or inversely may belong to the region of interest if its features are more likely to satisfy the statistical model of to the region of interest in the bimap ($B_i$).

In examples, the segmentation algorithm may be applied to each cell of the image ($I_i$), and the membership of each cell calculated by the algorithm may be stored in the resulting segmentation mask ($S_i$). In this way, all the cells of the resulting segmentation mask ($S_i$) may be labelled, e.g., with a first value when the segmentation algorithm determines that the cell belongs to the background and with a second value when the segmentation algorithm determines that the cell belongs to the region of interest. Alternatively, the segmentation algorithm may only be applied to all cells not labelled with the first or second value in the bimap ($B_i$). For example, the segmenting of the image ($I_i$) may comprise the following two steps. In a first step, segmenting of the image ($I_i$) may comprise labelling all cells labelled with the first or second value in the bimap ($B_i$), as belonging to the background or to the region of interest in the segmentation mask ($S_i$) accordingly. In this way, the bimap ($B_i$) is considered as ground truth. In a second step, segmenting of the image ($I_i$) may comprise applying the segmentation algorithm to all cells not labelled with the first or second value in the bimap ($B_i$) for determining whether they belong to the background or to the region of interest and labelling them accordingly in the segmentation mask ($S_i$). This allows ensuring that cells already labelled in the bimap ($B_i$) are labeled the same in the segmentation mask ($S_i$), while reducing computational effort and time.

The iterative process is now discussed. The steps performed during one of the iterations k are now discussed in more detail. However, all these details also apply equally to any other iteration performed.

The determining S51 of the upsampled segmentation mask ($S_k^{up}$) having a next resolution is now discussed. The determining S51 of the upsampled segmentation mask ($S_k^{up}$) is performed by upsampling the segmentation mask ($S_k$) obtained for the given image ($I_k$) to the next resolution. The next resolution is the resolution of the image ($I_{k-1}$) considered at the next iteration $k - 1$. When all the images ($I_k$) are computed using a rate $\delta^k$, the same rate $\delta^k$ applies for the resolutions of the segmentation masks ($S_k$). The next resolution of the upsampled segmentation mask ($S_k^{up}$) is equal to the resolution of the segmentation mask ($S_k$) multiplied by the parameter $\delta$. The next resolution of the upsampled segmentation mask ($S_k^{up}$) is the resolution considered at the next iteration and is thus also the resolution of the segmentation mask ($S_{k-1}$) computed at the next iteration.

The upsampling of the segmentation mask ($S_k$) obtained for the given image ($I_k$) to the next resolution may be performed by assigning, for each cell of the upsampled segmentation mask ($S_k^{up}$), the value in the closest cell of the spatial grid of the segmentation mask ($S_k$). In this step, since the next resolution is higher than the resolution of the segmentation mask ($S_k$), the

value of a same cell of the segmentation mask ($S_k$) may be assigned to several cells in the upsampled segmentation mask ($S_k^{up}$). The closest cell may be computed by considering the barycenter of the cells, or in any other way.

The determining S52 of the respective bimap ($B_{k-1}$) of the image ($I_{k-1}$) having the next resolution is performed based on the upsampled segmentation mask ($S_k^{up}$) determined at the previous step S51. The determined respective bimap ($B_{k-1}$) and the upsampled segmentation mask ($S_k^{up}$) have the same shape and resolution. During this step S52, each cell of the determined respective bimap ($B_{k-1}$) is labelled according to the corresponding cell of the upsampled segmentation mask ($S_k^{up}$) (i.e., positioned at the same position in the spatial grid) and its neighborhood (i.e., the neighboring cells around the corresponding cell). In particular, the cell of the determined respective bimap ($B_{k-1}$) is labelled with the first value when the corresponding cell of the upsampled segmentation mask ($S_k^{up}$) and its neighborhood belong to the background and with the second value when the corresponding cell of the upsampled segmentation mask ($S_k^{up}$) and its neighborhood belong to the region of interest. Otherwise, when the corresponding cell of the upsampled segmentation mask ($S_k^{up}$) and its neighborhood do not belong to the same category (background or region of interest), the cell of the determined respective bimap ($B_{k-1}$) may not be labelled, or may be labelled with another value representing a non-identified area.

The neighborhood of a given cell may comprise all the cells of the spatial grid that are closer than a predetermined distance of the given cell. For example, the neighborhood of a given cell may comprise all the cells that are adjacent to the given cell (i.e., the 8 adjacent cells for a 2D image or the 26 adjacent cells for a 3D image), or the next two or three rows of cells. More generally, the neighborhood of a given cell may comprise all the cells that surround the given cell by a distance N, which is given by the maximum difference between the coordinates of the cells on one dimension. The predetermined distance considered for determining S52 the respective bimap ($B_{k-1}$) may be function of the type of region (i.e., background or region of interest). For example, the determining S52 may consider a first predetermined distance for the neighborhood of cells of the background and a second predetermined distance for the neighborhood of cells of the region of interest.

In examples, the predetermined distance (or each predetermined distance in the case of several predetermined distances) considered for determining S52 the respective bimap ($B_{k-1}$) may be of constant absolute dimension from one iteration to the next. The constant absolute dimension may be function of the original resolution. For example, the constant absolute dimension may be higher than 2 and/or lower than 10 pixels or voxels of the original resolution. Alternatively, the constant absolute dimension may be function of the original image type. For example, the constant absolute dimension may be lower than 0.5 and/or higher than 2cm (e.g., may be substantially equal to 1cm) for a heart when the original image is a 3D medical image. The use of the constant absolute dimension from one iteration to the next may increase the accuracy of the segmentation.

In examples, prior to the segmenting S53, the method may further comprise, for each iteration, modifying the bimap ($B_{k-1}$) so that the cells of bimap ($B_{k-1}$) have the same values as the corresponding cells of a downsampled version of the bimap ($B_{ini}$) at the same resolution as the bimap ($B_{k-1}$) if, and only if, these corresponding cells are labelled with the first value representing to the foreground or the second value representing to the background. The segmenting S53 may then be performed based on the bimap ($B_{k-1}$) having the modified values. This improves the segmentation result, as it ensures that the initial indications provided by the user are not lost over the course of iterations.

At each iteration, the segmenting S53 may be performed as discussed above for a given image ($I_i$). In particular, the segmenting S53 may be performed based on any interactive binary segmentation algorithm (e.g., a backbone segmentation algorithm such as the Graph-Cut algorithm or the GeoS algorithm). In examples, the method may comprise using different segmentation algorithms at one or more iterations of the iterative scheme. For example, the method may comprise using a first segmentation algorithm for even iterations and a second algorithm for odd iterations (or any other type of combination of use of at least two algorithms as the function of the iterations). This improves the accuracy of the resulting segmentation, as it allows to take advantage of each of the algorithms.

The outputting S60 of the segmentation mask ($S_0$) is now discussed. The segmentation mask ($S_0$) outputted is the segmentation mask ($S_0$) obtained at step S53 in the last iteration (i.e., obtained from the segmentation of the original image ($I_0$) based on the last determined bimap ($B_0$)). The first and second values labelling the cells of the segmentation mask ($S_0$) may each delimit a coherent region within the original image ($I_0$). The first value may label cells the original image ($I_0$) belonging to the background of the original image ($I_0$) and the second value may label cells the original image ($I_0$) belonging to the region of interest. For example, the original image ($I_0$) may represent a person or an object in front of a background, and cells of the segmentation mask ($S_0$) labelled with the second value may have corresponding cells in the original image ($I_0$) that each belongs to the person or object (e.g., each of these cells provides the color of a pixel of the image in the background). Cells of the segmentation mask ($S_0$) labelled with the first value may have corresponding cells in the original image ($I_0$) that each belongs to the background behind the person or object (e.g., each of these cells provides the color of a pixel of the image in the region of interest which is the person or object in this example).

The outputting S60 may comprise the recording of the segmentation mask ($S_0$), e.g., together with the original image ($I_0$) to be segmented. The method may then comprise using the outputted segmentation mask ($S_0$) for analyzing the original image ($I_0$), as discussed previously. For example, the method may then comprise using the outputted segmentation mask ($S_0$) for preparing a surgery for a patient or communicating with the patient (when the original image ($I_0$) is a medical image), or for extracting portions of the original image ($I_0$) (when the original image ($I_0$) is an image of a 3D scene). For example, the method may then comprise displaying the original image ($I_0$) by highlighting cells of original image ($I_0$) corresponding to cells of the segmentation mask ($S_0$) labelled with the second value. This allows highlighting the region of interest in the original image ($I_0$). Alternatively or additionally, the method may then comprise displaying the original image ($I_0$) by masking (e.g., completely) cells of original image ($I_0$) corresponding to the cells of the segmentation mask ($S_0$) labelled with the first value. This allows hiding the background in the original image ($I_0$). If ($I_0$) is a 3D image, a potential use of the segmentation mask ($S_0$) is to define the contours of the region of interest (e.g., an organ) to extract 3D representation of this region of interest that can be 3D printed.

In examples, the method further comprises, prior to the computing S20 of the one or more images ($\forall k \in 1, ..., n, I_k$), the modifying of the values of the cells of the spatial grid of the original image ($I_0$). In particular, the modifying of the values of the cells is performed by applying an anti-aliasing filter to the original image ($I_0$). The method may use any anti-aliasing filter, such as an averaging filter. The downsampling performed for computing each image at step S20 is performed based on the modified values of the cells after the applying of the anti-aliasing filter. For example, when the downsampling comprises the assigning of values to cells of a determined empty spatial grid, the values assigned to the cells may be the modified values of the cells after the applying of the anti-aliasing filter. The modifying of the values of the cells by applying the anti-aliasing filter improves the resulting segmentation because it allows preventing aliasing, notably when resolution drops significantly. In particular, it allows reducing the risk of occurrence of aliasing problems, i.e., an image degradation due to under-sampling.

The steps in the method have so far been described with simple bimaps comprising just two classes (background and region of interest). In examples, the method may consider more complex bimaps. For example, the bimaps (i.e., the original bimap $B_0$ and

the determined bimap $B_{k-1}$) may comprise cells labelled with more than two labels. The bimaps may comprise cells labelled with a first value representing the background, cells labelled with a second value representing a first region of interest and cells labelled with a third value representing a second region of interest. More generally, the bimaps may comprise cells labelled with a first value representing the background and cells labelled with labels of a set of two or more labels each representing a respective region of interest (i.e., the second value and one or more additional labels). In that case, all the steps of the method may be carried out equivalently, considering cells labeled with the one or more additional labels as equivalent to cells labeled with the second value. In particular, each segmentation (S40 or S53) may be performed with a similar segmentation algorithm taking into account more than three values (the first and second values and the one or more additional labels) instead of only two, and each determining S53 of a bimap may be performed by, for each additional label, labelling cells having a neighborhood including only cells of the additional label with this additional label.

In examples, the more complex bimaps may also comprise bimaps having cells labelled with one or more potential labels each indicating that a cell potentially belongs to another respective label. For example, the more than two labels may include a third label for cells potentially belonging to the background and a fourth label for cells potentially belonging to the region of interest. In that case, at each iteration, the segmenting S53 may comprise assigning a value to each cell labelled with such potential labels (i.e., by applying the segmentation algorithm to this cell), but the information provided by these potential labels (e.g., potentially first value or potentially second value) may be used to assign the values of the other cells not labelled with the first or second value.

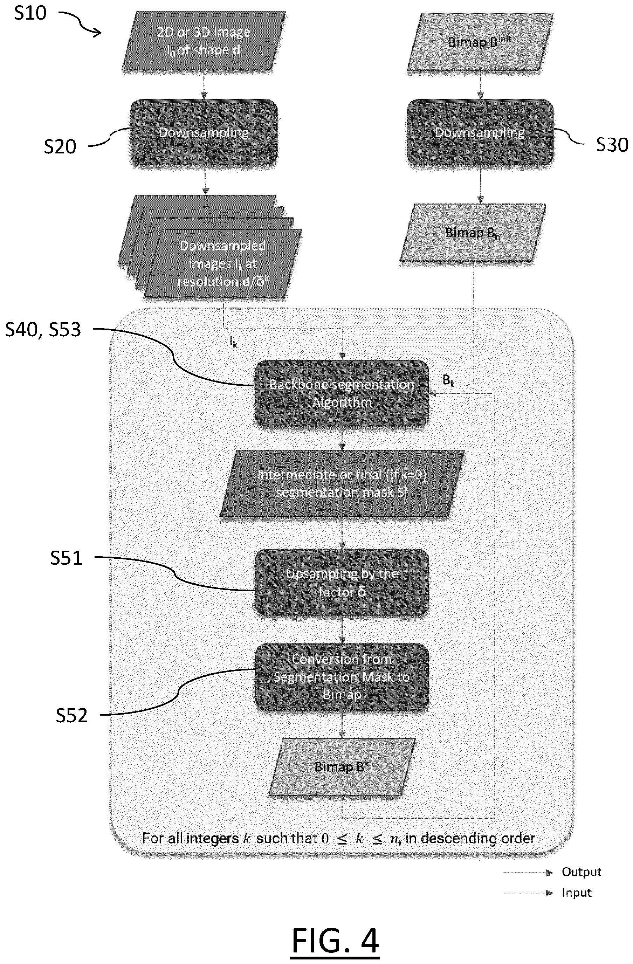

With reference to FIGs. 4 to 10, examples of implementations of the method are now discussed.

The method comprises an iterative scheme to boost the quality of example-based binary segmentation methods. Given a backbone example-based binary segmentation algorithm (e.g. the Grap-Cut algorithm), the method may include the following features. A first feature is that the backbone segmentation algorithm is applied to the image/volume at an increasing resolution at each iteration. A second feature is that the backbone segmentation algorithm only classifies cells in a margin (materialized by the said predetermined distance considered for the neighborhood of cells) around the frontier between the background and the region of interest (also referred to as foreground) as predicted during the previous iteration.

The method comprises an iterative scheme that enables to greatly reduce the overall complexity of the iterative use of example-based segmentation methods while improving the quality of the results. Therefore, compared to a direct iterative scheme (i.e., at the end of an iteration, an outputted segmentation mask is used to compute trivially a bimap that will serve as initialization for the next iteration of a segmentation algorithm), the method runs faster for the same number of iterations or allow more iterations for the same time budget. Due to its multi-resolution nature, the method enables to prevent high frequency artifacts (e.g., small background details mislabeled as foreground) in the outputted segmentation masks, thus improving the quality of the results.

Some terms are now being discussed.

The image may comprise a 2D or 3D spatial grid of which each cell (i.e., a pixel for a 2D grids or a voxel for 3D grids) is holding a mono or multi-channel intensity value (e.g., RGBA, Hounsfield Units, etc.). In simpler words, the word image is used here to encompass any type of 2D image or 3D volume.

The resolution may be the number cells of the image per dimensions.

The binary segmentation mask may comprise a spatial grid of the same dimension and resolution as the image. Its cells may hold values included in a set of 2 discrete values. The cells holding the same value may define a region of the image that may be topologically disconnected. Therefore, two regions may be defined, and they are typically designated as the background and the region of interest (also referred to as foreground in the following).

The bimap may comprise a spatial grid of the same dimension and resolution as the image. Its cells may hold values included in a set of at least 3 discrete values. For example, each of these values may designate one of the following regions: a foreground example region, a background example region and the rest of the image that may be labelled as the "undefined" region. The foreground and background example regions may be included in the foreground and background regions expected as results of a segmentation algorithm.

The backbone segmentation algorithm may be an example-based binary segmentation algorithm. It may be an algorithm that given an image and a bimap produces a binary segmentation mask. This algorithm may be seen as the binary classification of the cells as part of the foreground or the background. The method is particularly efficient when the backbone segmentation algorithm has an increasing complexity with regard to the number of cells to segment (e.g., such as the Graph-Cut segmentation algorithm).

The downsampling of a spatial grid may be the procedure consisting in producing a similar spatial grid at a lower resolution. At a same scale for both grids, the cells of the downsampled grid may have values as close as possible to the values of the cells of the original grid that they overlap. The upsampling of a spatial grid may be the inverse procedure consisting in producing a similar spatial grid at a higher resolution. The downsampling rate may be the ratio of the resolution of the original grid by the resolution of the downsampled grid. The upsampling factor may be the ratio of the resolution of the upsampled grid by the resolution of the original grid. Standard upsampling and downsampling methods include the linear interpolation or nearest-neighbor downsampling methods among others.

FIG. 4 shows an example of flowchart of the method. In this example, the parameters of the method include the following:

- An image to be segmented $I_0$.
- A bimap defining example regions $B^{init}$.
- One or more backbone segmentation algorithms.
- A fixed number of iterations $n$ (e.g., $n = 5$).
- A downsampling rate $\delta > 1$.
- Two margin size $\mu_{bg}$ and $\mu_{roi}$ (or predetermined distances) expressed in number of cells (pixels or voxels). They may be equal.
- The expected output is a segmentation mask $S_0$.

The method may be implemented by executing code instructions which, when run by a computer, cause the computer to carry out the following iterative algorithm:

1. The image $I_0$ (obtained at S10) is downsampled S20 at $n$ different resolutions creating, b' $k$ C 1, ... , $n$, $I_k$ a downsampled version of $I_0$ by a rate $\delta^k$.
2. The bimap $B^{init}$ is downsampled S30 by a rate $\delta^n$ to obtain the bimap $Bn$.
3. The backbone segmentation algorithm is performed S40 on the image $I_n$ based on the bimap $B_n$. Let's name $S_n$ the resulting segmentation mask.
4. For all integers $k$ such that $1 \leq k \leq n$, in descending order.:

a. $S_k$ is upsampled S51 by a factor $\delta$ to obtain the segmentation mask $S_k^{up}$.
b. The bimap $B_{k-1}$ is constructed S52 such as:

i. It has the same spatial dimension as $I_{k-1}$.
ii. All the cells further than $\mu_k^{bg} = \left\lceil \frac{\mu_{bg}}{\delta^{k-1}} \right\rceil$ cells of a foreground cell according to the segmentation mask $S_k^{up}$ are part of the background example region ($\mu_k^{bg}$ being the said predetermined distance defining the neighborhood cells of a given cell).
iii. All the cells further than $\mu_k^{roi} = \left\lceil \frac{\mu_{roi}}{\delta^{k-1}} \right\rceil$ cells of a background cell according to the segmentation mask $S_k^{up}$ are part of the foreground example region.
iv. The other cells are part of the "undefined region".

c. $S_{k-1}$ is obtained by applying S53 the backbone segmentation algorithm on the image $I_{k-1}$ based on the bimap $B_{k-1}$. If possible, the segmentation may only be performed on the cells in the "undefined region" of $B_{k-1}$.

At the end of these iterations the final segmentation mask $S_0$ is obtained at the original resolution.

For each downsampling at step 1, the method may comprise applying an anti-aliasing filter to the image, for example, an averaging filter.

$n$ and $\delta$ may be chosen such as $I_0$ and $B^{init}$ have a sufficiently high resolution (approximatively higher than 8). For example, for an 2D image of size 512*512, the parameters may be $n = 5$ and $\delta = 2$.

At step 4.a, $S_k^{up}$ and $I_{k-1}$ may be expected to have the same shape $\left\lceil \frac{d}{\delta^{k-1}} \right\rceil$ where d is the shape of $I_0$. Due to discretization, there may be a small offset between shapes of $S_k^{up}$ and $I_{k-1}$. In that case, $S_k^{up}$ may additionally be padded to fit the shape of $I_{k-1}$.

The step 4.b comprises defining uncertain margins at the frontier between the upsampled segmentation result of the previous iteration $S_k^{up}$. If the backbone segmentation algorithm may be applied only on a region of the image, it helps further reducing the complexity of the overall algorithm by restricting the region to be segmented to this uncertain margin. However, the definition of the unsure margins may be skipped, for example, if the backbone segmentation algorithm is only applied on the entire image. In that case, the example regions defined by $B_{k-1}$ may set to be the same as the regions defined by $S_k^{up}$. Furthermore, the segmentation algorithm may be applied on the entire image.

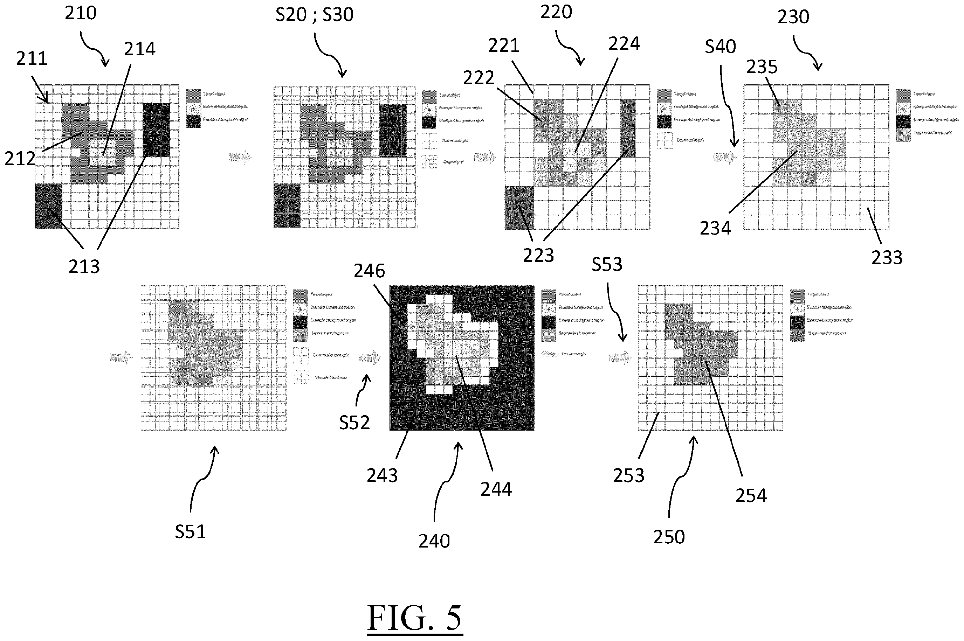

FIG. 5 illustrates an example of segmentation of the method with the parameters $n = 1$, $\delta = 1.6$, $\mu = 1$.

The method comprises the obtaining of the original image ($I_0$) and the original bimap ($B_{ini}$) of the original image ($I_0$). The values of the first channel include the value for the target background 211 (i.e., the real background of the image) and the value for the target region of interest 212. In this illustrative example, the belonging of each image cell to the background or foreground is directly encoded in this first channel. However, in more complex images, this first channel may comprise continuous values (e.g., varying within an interval, such as for tomography density value), or the image may comprise several channels (e.g. three for each of the three RGB colors and/or one for an RGB-D value). In these more complex images, the belonging of each image cell to the background or foreground is a complex function of the values of this and these channels (e.g., as for the cat and the background of the cat in image 110 of FIG. 1). The method enables delimitating coherent regions in these more complex images by accurately and efficiently assigning each cell to the background or the foreground. The steps of the method are now discussed using this illustrative example of figure 4, but the same applies for more complex images with one or more channels of continuous values (such the cat image 110 of FIG. 1, or any other medical or 3D scene images).

The segmentation aims at identifying which cells of the original image ($I_0$) belong to each of these target categories 211 and 212. The original bimap ($B_{ini}$) is now discussed. In the figure, the values of the original bimap ($B_{ini}$) are encoded in a second channel that takes as its value either a first value 213 representing the background or a second value 214 representing the region of interest. These values of the second channel 213 and 214 for the original bimap ($B_{ini}$) have been entered by a user (e.g., by clicking on the cells to assign the two values). In other words, the user has identified the cells having the value 213 as belonging to the background and the cells having the value 214 as belonging to the region of interest. The method takes these assignments as input to find automatically all the cells belonging to each of these two categories (background and region of interest).

The figure illustrates the downsampling S20 of the original image ($I_0$) and the downsampling S30 of the original bimap ($B_{ini}$) for computing the image ($I_1$) and the bimap ($B_1$). The spatial grid 210 of the original image ($I_0$) and bimap ($B_{ini}$) and the spatial grid 220 of the computed image ($I_1$) and bimap ($B_1$) are illustrated superposed to show the reduction of resolution. The spatial grid 220 includes cells having the same channel, namely the values 221, 222 for the resulting image ($I_1$) and the first and second value 223, 224 for the resulting bimap ($B_1$).

The method then comprise the segmenting S40 of the image ($I_1$) based on the bimap ($B_1$), and the figure illustrates the resulting segmentation mask ($S_1$) 230 of the image ($I_1$). The segmentation mask ($S_1$) 230 includes cells having the first value 233 representing the background and cells having the second value 234 representing the region of interest. The segmentation mask ($S_1$) 230 and the image ($I_1$) are illustrated superposed on the same spatial grid to show that not all cells are correctly assigned inn the segmentation mask ($S_1$) 230.

The figure then illustrates the determining S51 of an upsampled segmentation mask ( $S_1^{up}$ ) having a next resolution by upsampling the segmentation mask ($S_1$) 230 obtained for the image ($I_1$) to the next resolution. In this example, the method performs only one iteration ($n$ = 1), and the next resolution is therefore the original resolution of the original image ($I_0$).

The method then comprises the determining S52 of a bimap ($B_0$) 240 of the original image ($I_0$) based on the determined upsampled segmentation mask ( $S_1^{up}$ ). The cells of the bimap ($B_0$) 240 having a neigh-

borhood including only cells of the background according to the determined upsampled segmentation mask ( $S_1^{up}$ ) are labelled with the first value 253. The cells of the bimap ($B_0$) 240 having a neighborhood including only cells of the region of interest according to the upsampled segmentation mask ( $S_1^{up}$ ) are labelled with the second value 254. The figure also illustrates the predetermined distance 246 (or margin size) used for determining the neighborhood of a cell.

The method then comprises the segmenting S53 of the next resolution image, i.e., the original image ($I_0$), based on the determined bimap ($B_0$), thereby obtaining the segmentation mask ($S_0$) 250 of the original image ($I_0$). The obtained segmentation mask ($S_0$) 250 includes cells having the first value 253 representing the background and cells having the second value 254 representing the region of interest. The figure shows that the method allows identifying which cells belong to each of the two target categories 211 and 212 (background and region of interest), because the cells having the first value 253 corresponds to the cells belonging the background 211 in the original image ($I_0$) and the cells having the second value 254 corresponds to the cells belonging the region of interest 212 in the original image ($I_0$).

In this example, the method performs only one iteration ($n$ = 1). In other examples, the method may perform several iterations. The method comprises several repetition of the steps S51, S52 and S53 to generate several versions of the segmentation mask of increasing resolution until the original resolution of the original image is reached. In that case, the segmentation mask ($S_0$) of the original image ($I_0$) outputted by the method is the segmentation mask ($S_0$) obtained at step S53 of the last iteration.

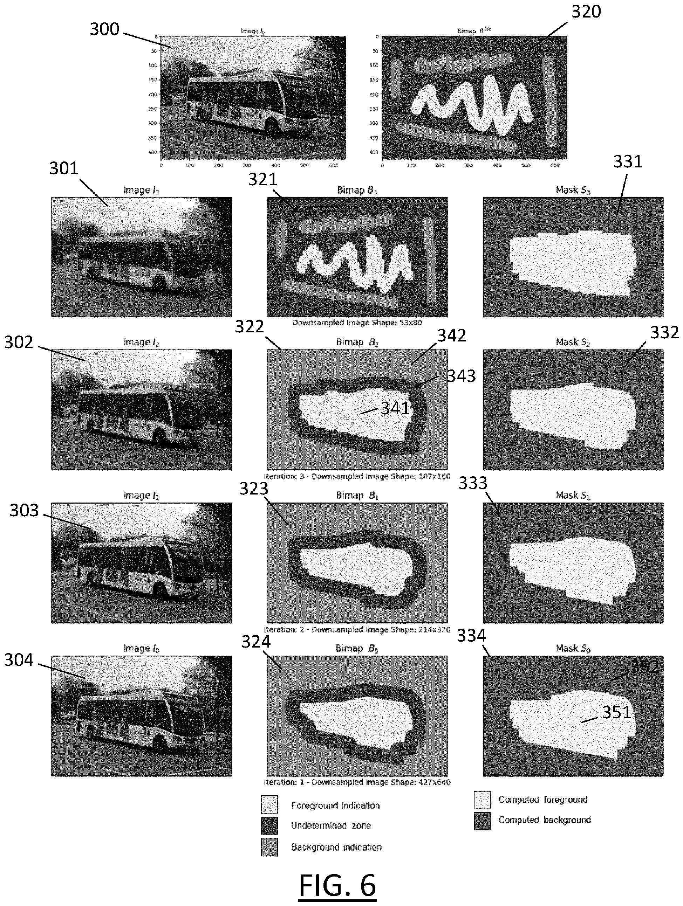

FIG. 6 illustrates a first example of a monochannel image segmentation using the method with the original Graph-Cut algorithm as the backbone segmentation algorithm. Especially, the figure shows the obtained original image 300 and original bimap 320. The figure also shows the images 301, 302, 303, 304 computed by downsampling the original image 300 and, at each iteration, the determined respective bimap 321, 322, 323, 324 and the respective segmentation mask 331, 332, 333, 334 obtained by the method. For the first iteration, the bimap 321 is computed by downsampling the original bimap 320. Then, the figure shows each of the determined bimap 322, 323, 324 (after the first iteration) and, for each bimap; the cells belonging to the region of interest 341, the cells belonging to the background 342 and the cells belonging to an undetermined zone 343 (i.e., having a respective neighborhood including both cell(s) of the background and cell(s) of the region of interest in the upsampled version of the segmentation mask computed at the previous iteration). At each iteration, the segmentation masks 331, 332, 333, 334 are computed by segmenting the computed images 301, 302, 303, 304 based on the bimaps 321, 322, 323, 324 determined for each iteration. The last determined segmentation mask 334 is the resulting segmentation of the original image 300 (i.e., the resulting image segmentation), with the region of interest 351 and the background 352.

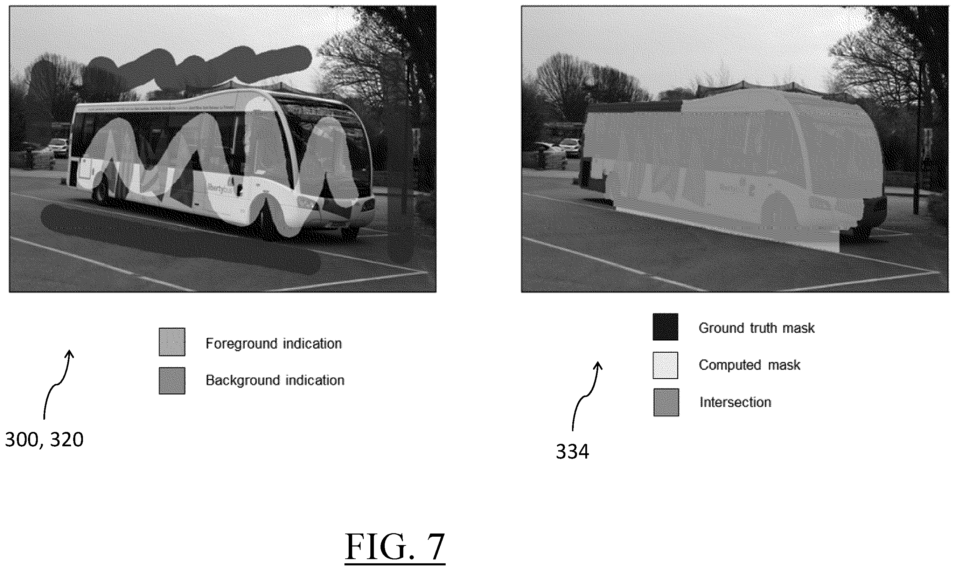

FIG. 7 shows the original image 300 and original bimap 320 of the first example of FIG. 6 superimposed. FIG. 7 also shows the resulting segmentation mask 334 superimposed with the original image 300 and the expected ground truth mask. The figure shows that the method is accurate since the resulting segmentation mask obtained is almost completely superimposed on the expected mask.

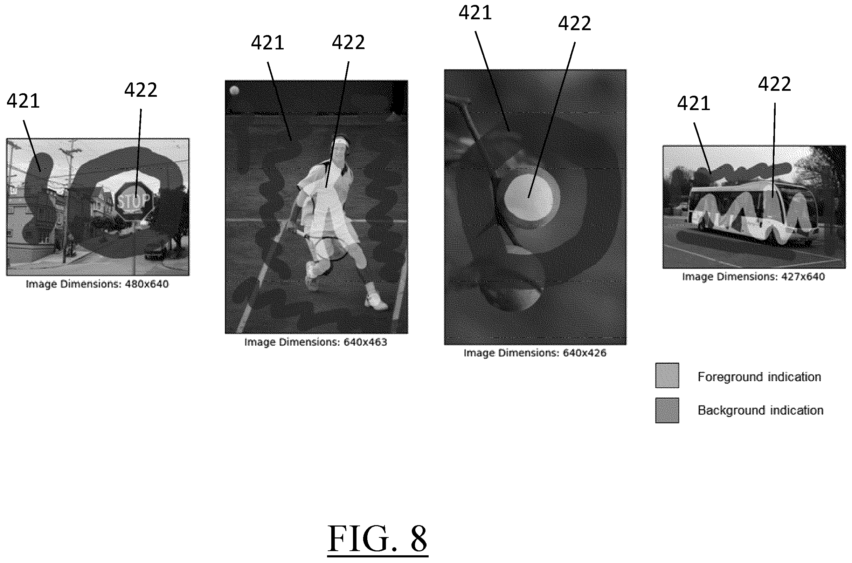

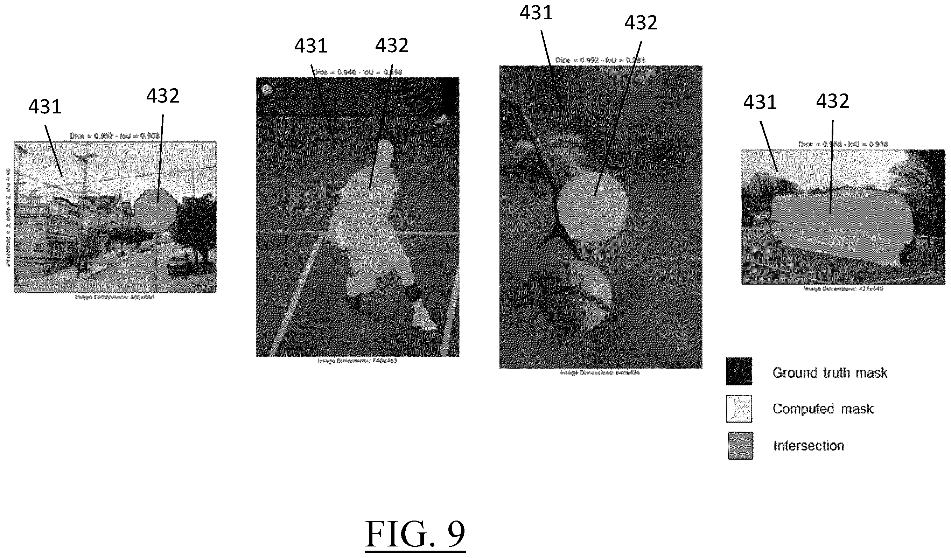

FIGs. 8 and 9 illustrates other examples of image segmentation using the method. Especially, FIG. 8 shows the original images and bimaps (with background regions 421 and region of interest regions 422) and FIG. 9 the resulting segmentation masks (with background regions 421 and region of interest regions 422) after applying the method (also superimposed with the expected ground truth masks so as to appreciate the accuracy of the method). The figure shows that the segmentation masks computed by the method are particularly relevant, accurately defining the contours of the region of interest in each of the original images considered.

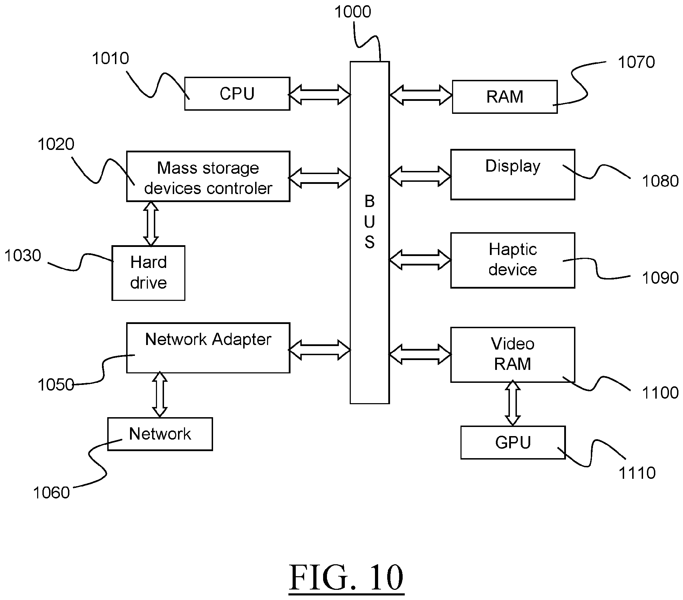

FIG. 10 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for segmenting an image, the method comprising:

   - obtaining (S10):

     ○ an original image ($I_0$) to be segmented, the original image ($I_0$) having an original resolution, the original image ($I_0$) comprising a spatial grid having cells and, for each cell, a value of at least one channel (e.g., physical signals, such as RGB value, or RGB-D, or tomography density), and

     ○ an original bimap ($B_{ini}$) of the original image ($I_0$), a bimap ($B_i$) of a given image ($I_i$) including first cells labelled with a first value representing a background of the given image ($I_i$) and second cells labelled with a second value representing a region of interest of the given image ($I_i$);

- computing (S20) one or more images ($\forall k \in 1, ... , n, I_k$) each by downsampling the original image ($I_0$) to a respective resolution;
- computing (S30) a bimap ($B_n$) of the image ($I_n$) having the lowest resolution by downsampling the obtained original bimap ($B_{ini}$) at the same resolution as the lowest resolution image ($I_n$);
- segmenting (S40) the lowest resolution image ($I_n$) based on the bimap ($B_n$) of the image ($I_n$) having the lowest resolution, thereby obtaining a segmentation mask ($S_n$) of the lowest resolution image ($I_n$); and
- iteratively for each given image ($I_k$) of the one or more determined images, starting from the lowest resolution image ($I_n$) and increasing the resolution ($\forall k \in 1, ... , n$ in descending order):

  ∘ determining (S51) an upsampled segmentation mask ($S_k^{up}$) having a next resolution by upsampling the segmentation mask ($S_k$) obtained for the given image ($I_k$) to the next resolution (i.e. the same resolution as ($I_{k-1}$));
  ∘ determining (S52) a respective bimap ($B_{k-1}$) of the image ($I_{k-1}$) having the next resolution based on the determined upsampled segmentation mask ($S_k^{up}$), each cell of the respective bimap ($B_{k-1}$) having a neighborhood including only cells of the background according to the determined upsampled segmentation mask ($S_k^{up}$) being labelled with the first value, each cell of the respective bimap ($B_{k-1}$) having a neighborhood including only cells of the region of interest according to the upsampled segmentation mask ($S_k^{up}$) being labelled with the second value; and
  ∘ segmenting (S53) the next resolution image ($I_{k-1}$) based on the respective bimap ($B_{k-1}$), thereby obtaining a segmentation mask ($S_{k-1}$) of the next resolution image ($I_{k-1}$);

- outputting (S60) the segmentation mask ($S_0$) of the original image ($I_0$) obtained at the last iteration.

2. The method of claim 1, wherein the neighborhood of cells considered at each iteration is of constant absolute dimension from one iteration to the next.

3. The method of claim 1 or 2, wherein the segmenting of each given image ($I_i$) based on the bimap ($B_i$) determined for the given image ($I_i$) comprises:

   - labelling all cells labelled with the first or second value in the bimap ($B_i$), as belonging to the background or to the region of interest in the segmentation mask ($S_i$) accordingly; and
   - applying a segmentation algorithm to all cells not labelled with the first or second value in the bimap ($B_i$) for determining whether they belong to the background or to the region of interest and labelling them accordingly in the segmentation mask ($S_i$).

4. The method of claim 3, wherein the segmentation algorithm is an interactive binary segmentation algorithm using the bimap ($B_i$) as indication.

5. The method of any of claims 1 to 4, wherein, for each determined image ($I_k$), the downsampling of the original image ($I_0$) to a respective resolution comprises:

   - determining an empty spatial grid of the determined image ($I_k$) sized at the respective resolution; and
   - assigning values to the cells of the determined empty spatial grid corresponding to the values in the corresponding cells of the spatial grid of the original image ($I_0$).

6. The method of claim 5, wherein the assigning of the values to the cells of the determined empty spatial grid is performed by:

   • interpolating the values in the corresponding cells of the spatial grid of the original image ($I_0$), or
   • by assigning, for each cell, the value in the closest cell of the spatial grid of the original image ($I_0$).

7. The method of claim 6, wherein the method further comprises, prior to the computing (S20) of the one or more images ($\forall k \in 1, ... , n, I_k$):

   - modifying the values of the cells of the spatial grid of the original image ($I_0$) by applying an anti-aliasing filter to the original image ($I_0$),

   the values assigned to the cells of the determined empty spatial grid being the modified values of the cells after the applying of the anti-aliasing filter.

8. The method of any of claims 1 to 7, wherein each computed image ($I_k$) is a downsampled version of the original image ($I_0$) by a rate $\delta^k$, wherein $\delta$ is a real

value higher than 1.

9. The method of any of claims 1 to 8, wherein the computing (S30) of the respective bimap ($B_n$) of the image ($I_n$) having the lowest resolution comprises downsampling the obtained original bimap ($B_{ini}$) to the resolution of the image ($I_n$) having the lowest resolution.

10. The method of any of claims 1 to 9, wherein the lowest resolution is chosen such as the image ($I_n$) is not a trivial image, preferably such as the image ($I_n$) is larger than a square or a cube of 8 cells on each side.

11. The method of any of claims 1 to 10, wherein the original image is a 2D image or a 3D image.

12. The method of claim 11, wherein the original image is a 3D medical image.

13. A computer program comprising instructions which, when the program is executed by a computer, cause the computer to carry out the method of any of claims 1-12.

14. A computer readable storage medium having recorded thereon a computer program of claim 13.

15. A system comprising a processor coupled to a memory, the memory having recorded thereon the computer program of claim 13.

FIG. 1

**FIG. 2**

Obtaining an original image ($I_0$) to be segmented and an original bimap ($B_{ini}$) of the original image ($I_0$) — S10

Computing one or more images ($\forall\ k \in 1, \ldots, n, I_k$) each by downsampling the original image ($I_0$) to a respective resolution — S20

Computing a bimap ($B_n$) of the image ($I_n$) having the lowest resolution — S30

Segmenting the lowest resolution image ($I_n$) based on the bimap ($B_n$), thereby obtaining a segmentation mask ($S_n$) — S40

$\forall\ k \in 1, \ldots, n$ in descending order — S50

Determining an upsampled segmentation mask ($S_k^{up}$) having a next resolution by upsampling the segmentation mask ($S_k$) — S51

Determining a respective bimap ($B_{k-1}$) of the image ($I_{k-1}$) having the next resolution based on the determined upsampled segmentation mask ($S_k^{up}$) — S52

Segmenting the next resolution image ($I_{k-1}$) based on the respective bimap ($B_{k-1}$) — S53

Outputting the segmentation mask ($S_0$) of the original image ($I_0$) obtained at the last iteration — S60

## FIG. 3

FIG. 4

FIG. 5

FIG. 6

FIG. 7

300, 320

Foreground indication

Background indication

334

Ground truth mask

Computed mask

Intersection

Image Dimensions: 480x640

Image Dimensions: 640x463

Image Dimensions: 640x426

Image Dimensions: 427x640

Foreground indication

Background indication

FIG. 8

FIG. 9

FIG. 10

Europäisches
Patentamt

European
Patent Office

Office européen
des brevets

# EUROPEAN SEARCH REPORT

**Application Number**

EP 24 30 5636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/165949 A1 (SINOP ALI KEMAL [US] ET AL) 19 July 2007 (2007-07-19)<br>* abstract *<br>* figures 1-5 *<br>* paragraphs [0003] - [0004], [0032] - [0057] * | 1-15 | INV.<br>G06T7/11<br>G06T7/194 |
| A | Jaimin-K: "Computer Vision from scratch: Image Downsampling ¦ by Jaimin-k ¦ Medium",<br>,<br>29 August 2023 (2023-08-29), pages 1-11, XP093212347,<br>Retrieved from the Internet:<br>URL:https://medium.com/@jaimin-k/computer-vision-from-scratch-image-downsampling-83c1be68f7af<br>[retrieved on 2024-10-07]<br>* page 1 - page 5 * | 1-15 | |
| A | Thormählen Thorsten: "ImageResizeNode ¦ How to resize an image with different resampling filters",<br>GSN Composer,<br>26 January 2022 (2022-01-26), XP093212378,<br>Retrieved from the Internet:<br>URL:https://web.archive.org/web/20220126082624/https://www.gsn-lib.org/docs/nodes/ImageResizeNode.php<br>[retrieved on 2024-10-07]<br>* the whole document * | 1-15 | **TECHNICAL FIELDS SEARCHED (IPC)**<br><br>G06T |

The present search report has been drawn up for all claims

| Place of search | Date of completion of the search | Examiner |
|---|---|---|
| The Hague | 7 October 2024 | Visser, Michelle L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5636

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | Publication date | Patent family member(s) | Publication date |
|---|---|---|---|
| US 2007165949 A1 | 19-07-2007 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. C. E. ROTHER** ; **V. KOLMOGOROV** ; **A. BLAKE**. GrabCut': Interactive Foreground Extraction Using Iterated Graph Cuts. *ACM SIGGRAPH 2004 Papers, 309-14, SIGGRAPH '04, New York, NY, USA: Association for Computing Machinery*, 2004, https://doi.org/10.1145/1186562.1015720

- Interactive Graph Cuts for Optimal Boundary Amp; Region Segmentation of Objects in N-D Images. **Y.Y BOYKOV** ; **M.-P. JOLLY**. Proceedings Eighth IEEE International Conference on Computer Vision. ICCV, 2001, vol. 1, 105-12
- GeoS: Geodesic Image Segmentation. **A. CRIMINISI** ; **T. SHARP** ; **A. BLAKE**. Computer Vision - ECCV 2008. Springer, 2008, 99-112